# EUROPEAN PATENT SPECIFICATION

(11) **EP 2 686 377 B1**
(45) Date of publication and mention of the grant of the patent: **17.06.2015**
(21) Application number: 11712101.2
(22) Date of filing: 18.03.2011
(51) Int. Cl.: C08K 3/00

(54) **METHOD FOR PREPARING ANTISTATIC UV CURABLE HARDCOATINGS ON OPTICAL ARTICLES**
VERFAHREN ZUR HERSTELLUNG VON ANTISTATISCHEN UV-HÄRTBARE HARTBESCHICHTUNGEN AUF OPTISCHEN ARTIKELN
PROCÉDÉ DE PRÉPARATION DE REVÊTEMENTS DURS DURCISSABLES PAR UV ANTISTATIQUES, SUR DES ARTICLES OPTIQUES

(43) Date of publication of application: 22.01.2014
(73) Proprietor: Essilor International (Compagnie Générale d'Optique), 94220 Charenton-le-Pont (FR)
(72) Inventor: VALERI, Robert, Dallas, Texas 75234 (US)
(74) Representative: Cabinet Plasseraud
(86) International application number: PCT/US2011/028964
(87) International publication number: WO 2012/128740

(56) References cited:
- WO-A1-01/21375
- WO-A1-99/18155
- WO-A1-2005/098478
- WO-A1-2008/052563
- WO-A2-2005/102675
- US-A1- 2008 023 138
- US-A1- 2009 186 229
- US-A1- 2010 296 049

## Description

The present invention relates to a method for manufacturing antistatic photocured hard-coatings on optical articles using a photocurable monomer solution based on a combination of acrylic monomers comprising at least one hexaacrylate, and also to a liquid photocurable composition for carrying out said method.

The build-up of static charge on plastic elements, especially plastic ophthalmic lenses coated with abrasion-resistant coatings, attracts dust and is unacceptable in many applications. In the case of eyewear, these dust particles cause light scattering or haze which can severely limit the visual acuity of the wearer and necessitates frequent cleaning.

Anti-static behavior of transparent coatings on optical articles can be obtained for example by first coating the substrate with a transparent conductive coating followed by an abrasion resistant hard-coating or by incorporating a thin conductive layer into the stack of functional coatings at the surface of an optical article such as described in US 2008/0023138..

EP 0834092 and US 6,852,406 describe antistatic optical articles having a mineral anti-reflection coating comprising a transparent antistatic layer based on conductive oxides deposited by vacuum evaporation.

Providing a separate conductive layer at the surface of an optical article however always requires an additional production step. Such an additional coating step would be superfluous if one of the functional coatings commonly present on optical articles could be made sufficiently conductive to efficiently dissipate electrostatic charges.

The aim of the present invention is to provide an optical article with an abrasion resistant hard-coating having anti-static performances resulting not from an underlying separate conductive layer but from the presence of conductive components in the hard-coating itself. The applicants especially aimed at providing anti-static transparent hard-coatings that could be easily applied by spin coating and cured by UV radiation.

When trying to incorporate conductive metal oxide colloids into liquid acrylic and epoxy-based photo-curable monomer systems, the applicants observed that the colloids undesirably agglomerated when introduced into the monomer solution, said agglomeration leading to hard-coating with unacceptable haze.

The Applicant discovered that homogeneous acrylic monomer solutions containing metal oxide colloids could only be prepared if the ingredients were mixed in a specific order: the colloids first had to be dispersed in a sufficient amount of an organic solvent, and the acrylic monomers then had to be added slowly one at a time to the colloid dispersion.

The applicants also discovered that, even when preparing the coating composition in the above way, the metal oxide colloids sometimes agglomerated or precipitated, and that this was due to the presence of triarylsulfonium salts, cationic photoinitiators used to photo-polymerize epoxy monomers. They consequently decided to develop (meth)acrylic coating solutions based only on radically polymerizable monomers, i.e. not containing any epoxy monomers.

Finally, the Applicant observed that surprisingly it seemed necessary to use an efficient amount of at least one hexaacrylate monomer not only to impart good mechanical properties to the final coating, but to keep the good antistatic performances of the resulting coatings and optical articles over time.

The present invention is consequently drawn to a liquid photo-curable composition as defined in claim 1.

The present invention is also drawn to a method for preparing the above liquid composition. Said method comprises the following successive steps:
- dispersing the requested amount of conductive colloid in the organic solvent,
- progressively adding under mixing the requested amount of a mixture of polyfunctional acrylic monomers (a) and (b), or separately each of the polyfunctional acrylic monomers (a) and (b), to the resulting colloidal organic dispersion, then
- adding the requested amount of radical photoinitiator to the resulting composition, and
- mixing the resulting photocurable composition until homogeneous.

Antistatic performance of a material may be assessed by measuring the "decay time" according to ISTM 02-066. Decay time is the time to have 36.7 % of the initial maximum voltage remaining after corona discharge. It is generally considered that decay times of less than one second are good and decay times of less than 0.25 second are very good.

The inventors have measured the anti-static performance of hard-coatings containing increasing amounts of Sn₂O₅ salts and have found that there was a minimum threshold concentration of about 8.0 % by weight below which the decay time of the final cured hard-coatings dramatically increased, i.e. the antistatic performances undesirably decreased.

The conductive colloid used in the present invention is selected from the group consisting of Sb₂O₅ and SnO₂, and is preferable Sb₂O₅. As will be shown in the below examples, the minimum amount of Sb₂O₅ requested to obtain satisfactory anti-static properties is generally lower than the corresponding amount of other metal oxides.

A suitable product that can be used as Sb₂O₅ colloids in the method and composition of the present invention is sold by JGC under the reference ELCOM^{®} NE 1002 SBV (19 wt% dispersion of colloidal silica and Sb₂O₅ in methanol). Colloidal SnO₂ can be obtained for example under the reference ELCOM^{®} NE 1003 PTV (15 - 25 wt% dispersion from JGC) or under the reference CELNAX^{®} CX-S204IP (from Nissan Chemical).

As explained above, the metal oxide colloid cannot be incorporated by mixing it directly with the acrylic monomers but first has to be dispersed in and diluted with an organic solvent. Preferred solvents can be selected from lower alcohols, glycols and monoethers thereof which are generally miscible with the acrylic monomers to be polymerized.

Organic solvents are methanol, ethanol, propanol, butanol, glycols, and glycol monoethers. The most preferred solvent is 1-propanol.

The organic solvent is preferably added in an amount such that the concentration of the conductive metal oxide in the dispersion, before addition of the other components (monomers, photoinitiators, surfactant), is comprised between 8 and 15 % by weight.

The (meth)acrylic monomers are subsequently added slowly to the colloid dispersion under mixing. The different monomers may be added simultaneously but are preferably added one at a time.

The at least one monomer (a) comprising at least six acrylic functional groups is preferably selected from the group consisting of dipentaerythritol hexaacrylate, polyester hexaacrylate, sorbitol hexaacrylate, and fatty acid-modified polyester hexaacrylate, and is most preferably dipentaerythritol hexaacrylate.

The at least one monomer (b) comprising two, three or four (meth)acrylic functional groups is selected from the group consisting of pentaerythritol triacrylate, pentaerythritol tetraacrylate, tetraethyleneglycol diacrylate, diethyleneglycol diacrylate, triethyleneglycol diacrylate, 1,6-hexanediol di(meth)acrylate, tripropylene glycol diacrylate, dipropyleneglycol diacrylate, ethyleneglycol dimethacrylate, trimethylolethane triacrylate, trimethylolmethane triacrylate, trimethylolpropane triacrylate, trimethylolpropane trimethacrylate, 1,2,4-butanetriol trimethacrylate, tris(2-hydroxyethyl) isocyanurate triacrylate, di-trimetholpropane tetraacrylate, ethoxylated pentaerythritol tetraacrylate, triphenylolmethane triacrylate, trisphenol triacrylate, tetraphenylol ethane triacrylate, 1,2,6-hexanetriol triacrylate, glycerol triacrylate, diglycerol triacrylate, glycerol ethoxylate triacrylate, ethylene glycol diacrylate, 1,4-butanediol diacrylate, 1,4 butanediol dimethacrylate, neopentyl glycol diacrylate, cyclohexanedimethanol diacrylate, dipropylene glycol diacrylate, and polypropylene glycol diacrylate.

Most preferred monomers (b) are selected from the group consisting of diethyleneglycol diacrylate, triethyleneglycol diacrylate, tetraethyleneglycol diacrylate, and pentaerythritol triacrylate.

The weight ratio of the monomer or monomers (a) comprising at least six acrylic functional groups to the monomer or monomers (b) comprising two, three or four (meth)acrylic groups is comprised in the range of 20/80 to 80/20, preferably 30/70 to 70/30 and more preferably 40/60 to 60/40.

The photoinitiator is added to the composition only at the very end once the whole amount of monomers has been homogeneously mixed with the conductive metal oxide colloid. It goes without saying that composition of the present invention should be prepared in a container opaque to UV radiation in order to prevent premature polymerization. The photopolymerizable compositions containing the acrylic monomers, the solvent, the antistatic colloid, and the photoinitiators can be stored at room temperature for at least five months, with the proviso they are protected from UV radiations.

The photoinitiator is added preferably in an amount of from 1 % to 5 % by weight, more preferably from 1.5 to 4.5 by weight, relative to the total amount of (meth)acrylate monomers. Free radical photo-initiators are selected from haloalkylated aromatic ketones such as chloromethylbenzophenones ; some benzoin ethers such as ethyl benzoin ether and isopropyl benzoin ether ; dialkoxyacetophenones such as diethoxyacetophenone and α,α-dimethoxy-α-phenylacetophenone ; hydroxy ketones such as (1-[4-(2-hydroxyethoxy)-phenyl]-2-hydroxy-2-methyl-1-propan- 1-one) (Irgacure^{®} 2959 from CIBA), 1-hydroxy-cyclohexyl-phenyl-ketone (Irgacure^{®} 184 from CIBA) and 2-hydroxy-2-methyl-1-phenylpropan-1-one (such as Darocur^{®} 1173 sold by CIBA) ; alpha amino ketones, particularly those containing a benzoyl moiety, otherwise called alpha-amino acetophenones, for example 2-methyl 1-[4-phenyl]-2-morpholinopropan-1-one (Irgacure^{®} 907 from CIBA), (2-benzyl-2-dimethyl amino-1-(4-morpholinophenyl)-butan-1-one (Irgacure^{®} 369 from CIBA); monoacyl and bisacyl phosphine oxides and sulphides, such as phenylbis(2,4,6-trimethylbenzoyl)-phosphine oxide (Irgacure^{®} 819 sold by CIBA) ; triacyl phosphine oxides ; and mixtures thereof.

The UV-polymerizable compositions of the present invention may optionally and preferably contain small amounts, preferably from 0.05 to 0.50 % by weight, more preferably from 0.05 to 0.3 % by weight, and most preferably from 0.1 to 0.20 % by weight of at least one surface active compound. The surface active agent is important for good wetting of the substrate resulting in satisfactory cosmetics of the final hard-coating. Said surfactant can include for example poly(alkylene glycol)-modified polydimethylsiloxanes or polyheptamethylsiloxanes, or fluorocarbon-modified polysiloxanes. The heat-curable compositions preferably contain from 0.05 % to 0.3 % of a fluorocarbon-modified polysiloxane, such as the commercial product EFKA^{®} 3034 sold by Ciba Specialty Chemicals.

Colloidal silica may be added to the essentially anhydrous coating composition in an amount of up to 50 % by weight, relative to the total dry matter of the composition. Addition of colloidal silica results in enhanced Bayer abrasion resistance.

The present invention further is drawn to a method for preparing a cured anti-static and abrasion-resistant acrylic hard-coating on an organic substrate using the coating of the present invention. Said method comprises coating the above liquid photocurable composition onto an optical substrate, and then irradiating the coated substrate with UV light so as to obtain a cured acrylic antistatic hard-coating.

The coating solution is preferably coated by spin coating on any suitable optical substrate. The selection of the optical substrate is not critical for the present invention. However, for eyewear applications organic glasses are preferred over mineral glasses for reasons well known to the skilled person. Preferred organic glasses are made of allyl diglycol carbonate polymers or thermoplastic polycarbonates.

The coating solution is coated onto the optical substrate with a dry layer coating thickness of between 1 and 10 µm, preferably of between 1.5 to 7 µm and even more preferably of between 2.5 to 6 µm.

After coating and optionally drying the resulting optical substrate coated with the coating solution is submitted to irradiation with UV light. The curing step comprises irradiating the coated layer with a UV radiation dosage ranging from 0.150 J/cm² to 1.20 J/cm² in the UV-C range (290nm - 100nm). Irradiation times range from about 1 second to 10 seconds. Naturally, it is possible to achieve the same dosage range using a lower intensity bulb for a longer time.

The method of the present invention is now further illustrated by means of several examples demonstrating the good anti-static properties of hard-coatings containing either Sb₂O₅ or SnO₂ colloids, and also the criticality of the presence of at least one hexaacrylate monomer.

### Examples

### Examples 1- 4

### Incorporation of colloidal Sb₂O₅ into spin-coated UV-cured hard-coatings according to the present invention

The organic solvent (1-propanol) is introduced into an amber vial and the colloidal Sb₂O₂ in methanol (Elcom NE 1002 SBV) is dispersed therein under gentle mixing. The acrylic monomers are then added very slowly and one at a time while mixing. Next, the two free radical photoinitiators (DAROCUR 1173 and IRGACURE 819) are added and the resulting solution is mixed at room temperature until homogeneous. Last, the surfactant (EFKA 3034) is added to the liquid clear composition under mixing.

The liquid compositions were applied by spin coating to the convex side of uncoated finished CR 39 lenses and to the concave side of surfaced semi-finished single vision lenses of thermoplastic polycarbonate using a Headway^{®} spin coater and cured using a Fusion Systems^{®} UV belt conveyer under the conditions listed below.

### Spin coating conditions:

Spin application speed: 800 rpm for 10 seconds,
Coating spread speed: 1200 rpm for 8 seconds,

### Curing conditions:

UV Dosage:
   UV-A: 1.926 J/cm², UV-B: 1.513 J/cm², UV-C: 0.327 J/cm², US-V: 1.074 J/cm²
UV Power:
   UV-A: 1.121 W/cm², UV-B: 0.850 W/cm², UV-C: 0.180 W/cm², US-V: 0.602 W/cm² Decay times were measured according ISTM 02-066.

The composition and anti-static performances of four anti-static coatings according to the present invention are listed in Table 1.

**Table 1 Antistatic performances of antistatic hard-coatings containing Sb₂O₅ colloids.**

| | **Example 1** | **Example 2** | **Example 3** | **Example 4** |
|---|---|---|---|---|
| | **% by mass** | **% by mass** | **% by mass** | **% by mass** |
| **Elcom NE 1002 SBV (antistatic Sb₂O₅ colloid)** | **24.37** | **24.37** | **24.37** | **24.37** |
| | | | | |
| **Dipentaerythritolhexaacrylate (hexaacrylate)** | **24.37** | **24.37** | **24.37** | **24.37** |
| Tetraethyleneglycoldiacrylate (diacrylic monomer) | --- | --- | 24.37 | --- |
| Diethyleneglycoldiacrylate (diacrylic monomer) | --- | --- | --- | 24.37 |
| Triethyleneglycoldiacrylate (diacrylic monomer) | 24.37 | --- | --- | --- |
| Pentaerythritol triacrylate (triacrylic monomer) | --- | 24.37 | --- | --- |
| Propanol (solvent) | 24.36 | 24.36 | 24.36 | 24.36 |
| | | | | |
| 2-hydroxy-2-methyl-1-phenyl-1-propanone (DAROCUR 1173 from Ciba) | 1.83 | 1.83 | 1.83 | 1.83 |
| Bis(2,4,6-trimethylbenzoyl)-phenylphosphineoxide (IRGACURE 819 from Ciba) | 0.61 | 0.61 | 0.61 | 0.61 |
| | | | | |
| EFKA^{®} 3034 (wetting agent) | 0.09 | 0.09 | 0.09 | 0.09 |
| | | | | |
| Antistatic Performance | | | | |
| Decay time (sec) | ***0.049/ 0.051** | ***0.168/ 0.186** | ***0.057/ 0.062** | ***0.041/ 0.040** |

| | | | | |
|---|---|---|---|---|
| * on CR39/on PC | | | | |

All compositions containing 24.37 wt% of Elcom NE 1002 SBV lead to final cured hard-coatings containing 8.43 wt% of Sb₂O₅. The above results show that the decay times of all examples according to the present invention containing 8.43 % of Sb₂O₅ and both a hexaacrylate and a diacrylic monomer (Examples 1, 3, and 4) or a triacrylic monomer (Example 2) have very good antistatic performances with decay times lower than 250 milliseconds, both on thermoplastic polycarbonate (PC) and on CR^{®}39 lenses.

All samples had transmission values of at least 90 % and haze values (Haze Guard XL-211 plus meter using the standard method ASTM D 1003-00) lower than 0.2. Their adhesion to both type of substrates was satisfactory.

### Examples 5 - 7

### Incorporation of colloidal SnO₂ into spin coated UV-cured hard-coatings according to the present invention

Hard-coatings containing 10.48 wt% of SnO₂ colloids were prepared according to the procedure described for Examples 1 to 4, except that ELCOM^{®} NE 1002 SBV was replaced by CELNAX^{®} CX-S204IP (Nissan Chemical) an isopropanol dispersion of colloidal SnO₂.

The composition and anti-static performances of three anti-static coatings according to the present invention are listed in Table 2.

**Table 2 Antistatic performances of antistatic hard-coatings containing SnO₂ colloids.**

| | **Example 5** | **Example 6** | **Example 7** |
|---|---|---|---|
| | **% by mass** | **% by mass** | **% by mass** |
| **CELNAX CX-S204IP (SnO₂ colloid)** | **29.2** | **29.2** | **29.2** |
| | | | |
| **Dipentaerythritolhexaacrylate (hexaacrylate monomer)** | **24.3** | **24.3** | **24.3** |
| Tetraethyleneglycoldiacrylate (diacrylic monomer) | --- | 24.3 | --- |
| Diethyleneglycoldiacrylate (diacrylic monomer) | --- | --- | 24.3 |
| Triethyleneglycoldiacrylate (diacrylic monomer) | 24.3 | --- | --- |
| Propanol (solvent) | 19.4 | 19.4 | 19.4 |
| | | | |
| 2-hydroxy-2-methyl-1-phenyl-1-propanone (DAROCUR 1173 from Ciba) | 2.09 | 2.09 | 2.09 |
| Bis(2,4,6-trimethylbenzoyl)-phenylphosphineoxide (IRGACURE 819 from Ciba) | 0.7 | 0.7 | 0.7 |
| | | | |
| EFKA^{®} 3034 (wetting agent) | 0.09 | 0.09 | 0.09 |
| | | | |
| Antistatic performance | | | |
| Decay time (sec) | ***0.18/0.13** | ***0.20/0.14** | ***0.21/0.16** |

| | | | |
|---|---|---|---|
| *on CR39/on PC | | | |

The thickness of all three coatings is comprised between 5 and 6 µm. All coated lenses have good haze values (less than 0.2) and transmission values of at least 90 %.

These examples show that SnO₂ can also be used as an efficient antistatic agent in transparent acrylic UV-cured hard-coatings. The resulting antistatic performances (decay times < 0.25 second) are excellent and only slightly inferior to those of equivalent compositions containing Sb₂O₅ (see Examples 1 - 4).

Control hard-coatings prepared in the same way as describes in Examples 1 - 7 but not containing any anti-static conductive colloid have decay times higher than 100 seconds (results not shown).

### Examples 8 and 9 and Comparative Examples 1 and 2

### Criticality of the presence of at least one hexaacrylate monomer for maintenance of the antistatic performance over time

The hard-coatings of Examples 8 and 9 according to the invention are prepared as described in Examples 1 - 7. Comparative Examples 1 and 2 are strictly identical to Examples 8 and 9, except that dipentaerythritol hexaacrylate is replaced by a mixture of pentaerythritoltriacrylate and pentaerythritol tetraacrylate (PETIA^{®}).

The decay times of all four samples are measured according to ISTM 02-066 and the lenses are then submitted to accelerated aging performed in the aging chamber of a device Q PANEL, model QUV.

In a first step (a), the lens to be submitted to accelerated aging is placed for two hours in a chamber at 45 °C with a water-saturated atmosphere (condensation of water on the lens surface).

The condensation of water is then stopped and, in a second step (b), the lens is subjected to UV radiation (0.75 W/m²/nm) for two hours at 45 °C.

At the end of the second step, the lens is again submitted to step (a) and then to step (b). This cycling is implemented for a total duration of 80 hours (20 x 2 x 2 hours).

After 80 hours of accelerated aging, the four samples are again tested for their antistatic performances. The results are shown in below Table 3

**Table 3**

| Antistatic performances of antistatic hard-coatings before and after accelerated aging | | | | |
|---|---|---|---|---|
| | **Example 8** | **Example 9** | **Comp. Ex 1** | **Comp. Ex** 2 |
| | **% by mass** | **% by mass** | **% by mass** | **% by mass** |
| **Elcom NE 1002 SBV (antistatic colloid)** | **24.21** | **24.21** | **24.21** | **24.21** |
| **Dipentaerythritolhexaacrylate (hexaacrylate)** | **24.21** | **24.21** | --- | --- |
| Mixture of pentaerythritol triacrylate and pentaerythritol tetraacrylate (PETIA^{®}) | --- | --- | 24.21 | 24.21 |
| Diethyleneglycol diacrylate (diacrylic monomer) | --- | 24.21 | --- | 24.21 |
| Triethyleneglycol diacrylate (diacrylic monomer) | 24.21 | --- | 24.21 | --- |
| Propanol (solvent) | 24.21 | 24.21 | 24.21 | 24.21 |
| 2-hydroxy-2-methyl-1-phenyl-1-propanone (DAROCUR 1173 from Ciba) | 1.83 | 1.83 | 1.83 | 1.83 |
| Bis(2,4,6-trimethylbenzoyl)-phenylphosphineoxide (IRGACURE 819 from Ciba) | 0.61 | 0.61 | 0.61 | 0.61 |
| | | | | |
| EFKA^{®} 3034 (wetting agent) | 0.09 | 0.09 | 0.09 | 0.09 |
| | | | | |
| Antistatic performance | | | | |
| Decay time (sec) before QUV | **0.038**** | **0.042*** | **0.031**** | **0.025**** |
| | | | | |
| Decay time (sec) after 80 h QUV | **0.082**** | **0.105**** | **0.377**** | **0.342**** |

| | | | | |
|---|---|---|---|---|
| ** on CR39 | | | | |

These results show that when the hexaacrylate monomer is replaced by an equivalent amount of a mixture of triacrylate and tetraacrylate monomers, the excellent antistatic performances observed immediately after curing of the coatings are significantly altered after the aging test.

### Comparative Examples 3 - 7

### Criticality of the presence of at least one hexaacrylate monomer for obtaining excellent antistatic performances

Comparative Examples 3 to 7 have been prepared as described for Examples 5 to 7, except that the coating composition do not contain any hexaacrylate monomer but only a mixture of difunctional, trifunctional and/or tetrafunctional acrylic monomers.

The composition and anti-static performances of five comparative anti-static coatings are listed in below Table 4.

**Table 4**

| Antistatic performances of antistatic comparative hard-coatings containing SnO₂ colloids. | | | | | |
|---|---|---|---|---|---|
| | **Comp. Ex 3** | **Comp. Ex 4** | **Comp. Ex 5** | **Comp. Ex 6** | **Comp. Ex 7** |
| | **% by mass** | **% by mass** | **% by mass** | **% by mass** | **% by mass** |
| **CELNAX CX-S204IP (SnO₂ colloid)** | **29.2** | **29.2** | **21.7** | **21.7** | **21.7** |
| **Dipentaerythritol hexa-acrylate (hexaacrylate)** | **---** | **---** | **---** | **---** | **---** |
| Pentaervthritol triacrylate | 24.3 | **---** | --- | **---** | 21.7 |
| Mixture of pentaerythritoltriacrylate and pentaerythritol tetraacrylate (PETIA^{®}) | **---** | 24.3 | 21.7 | 21.7 | 21.7 |
| Diethyleneglycoldiacryla te (diacrylic monomer) | **---** | --- | 21.7 | **---** | **---** |
| Triethyleneglycoldiacryl ate (diacrvlic monomer) | 24.3 | 24.3 | **---** | 21.7 | **---** |
| Propanol (solvent) | 19.4 | 19.4 | 21.7 | 21.7 | 21.7 |
| Diacetone alcohol (solvent) | **---** | --- | 10.86 | 10.86 | 10.86 |
| | | | | | |
| 2-hydroxy-2-methyl-1-phenyl-1-propanone (DAROCUR^{®} 1173 from Ciba) | 2.09 | 2.09 | 1.63 | 1.63 | 1.63 |
| Bis(2,4,6-trimethylbenzoyl)-phenylphosphineoxide (IRGACURE^{®} 819 from Ciba) | 0.7 | 0.7 | 0.54 | 0.54 | 0.54 |
| EFKA^{®} 3034 (wetting agent) | 0.09 | 0.09 | 0.08 | 0.08 | 0.08 |
| | | | | | |
| Antistatic performance | | | | | |
| Decay time | ***0.33/0.20** | ***1.74/0.87** | ***0.18/0.72** | ***0.16/0.60** | ***0.21/0.59** |

| | | | | | |
|---|---|---|---|---|---|
| * on CR39/on PC | | | | | |

The above results show that the antistatic performances of hard-coatings prepared from compositions not containing any hexaacrylate monomer are far less satisfactory than those of Examples 5 to 7 of the present invention.

## Claims

1. A liquid photocurable composition comprising:
- from 25 to 65 % by weight, preferably from 35 % to 60 % by weight, relative to the total weight of the composition, of a mixture of polyfunctional acrylic monomers, said mixture consisting of
(a) at least one monomer comprising at least six acrylic functional groups, and
(b) at least one monomer comprising two, three or four (meth)acrylic functional groups, preferably two or three acrylic functional groups,
- from 25 to 70 % by weight, preferably from 55 to 60 % by weight, relative to the total weight of the composition of at least one organic solvent selected from the group consisting of methanol, ethanol, propanol, butanol, glycols, and glycol monoethers,
- from 8.0 to 20.0 % by weight, preferably from 8.5 to 12 % by weight, relative to the total solids content of the composition, of at least one mineral conductive colloid selected from the group consisting of Sb₂O₅ and SnO₂,
- from 0.5 to 5 % by weight, preferably from 1.0 - 4.0 % by weight, relative to the total weight of acryl functional monomers (a) and (b), of at least one radical photoinitiator selected from the group consisting of haloalkylated aromatic ketones such as chloromethylbenzophenones; ethyl benzoin ether and isopropyl benzoin ether; dialkoxyacetophenones; hydroxy ketones; alpha amino ketones; monoacyl and bisacyl phosphine oxides and sulphides; triacyl phosphine oxides; and mixtures thereof,
said photocurable composition not containing any epoxy-functional monomer.

2. The liquid photo-curable composition as claimed in claim 1, further comprising from 0.05 to 0.50 % by weight of at least one surfactant, said surfactant preferably being selected from fluorocarbon-modified polysiloxanes.

3. The liquid photo-curable composition as claimed in claim 1 or 2, wherein the conductive colloid is Sb₂O₅.

4. The liquid photocurable composition as claimed in any of the preceding claims, wherein the organic solvent is propanol.

5. The liquid photocurable composition as claimed in any of the preceding claims, wherein the weight ratio of the monomer or monomers comprising at least six acrylic functional groups to the monomer or monomers comprising two, three or four (meth)acrylic groups is comprised in the range of 20/80 to 80/20, preferably 30/70 to 70/30 and more preferably 40/60 to 60/40.

6. The liquid photocurable composition as claimed in any of the preceding claims, wherein the monomer (a) comprising at least six acrylic functional groups is selected from the group consisting of dipentaerythritol hexaacrylate, polyester hexaacrylate, sorbitol hexaacrylate, and fatty acid-modified polyester hexaacrylate, and preferably is dipentaerythritol hexaacrylate.

7. The liquid photocurable composition as claimed in any of the preceding claims, wherein the at least one monomer (b) comprising two, three or four (meth)acrylic functional groups is selected from the group consisting of pentaerythritoltriacrylate, pentaerythritol tetraacrylate, tetraethyleneglycol diacrylate, diethyleneglycol diacrylate, triethyleneglycol diacrylate, 1,6-hexanediol di(meth)acrylate, tripropyleneglycol diacrylate, dipropyleneglycol diacrylate, ethyleneglycol dimethacrylate, trimethylolethane triacrylate, trimethylolmethane triacrylate, trimethylolpropane triacrylate, trimethylolpropane trimethacrylate, 1,2,4-butanetriol trimethacrylate, tris(2-hydroxyethyl) isocyanurate triacrylate, di-trimetholpropane tetraacrylate, ethoxylated pentaerythritol tetraacrylate, triphenylolmethane triacrylate, trisphenol triacrylate, tetraphenylol ethane triacrylate, 1,2,6-hexanetriol triacrylate, glycerol triacrylate, diglycerol triacrylate, glycerol ethoxylate triacrylate, ethylene glycol diacrylate, 1,4-butanediol diacrylate, 1,4 butanediol dimethacrylate, neopentyl glycol diacrylate, cyclohexanedimethanol diacrylate, dipropylene glycol diacrylate, polypropylene glycol diacrylate.

8. A method for preparing a liquid photocurable composition according to claim 1, said method comprising:
- dispersing the requested amount of conductive colloid in the organic solvent,
- progressively adding under mixing the requested amount of a mixture of polyfunctional acrylic monomers (a) and (b), or separately each of the polyfunctional acrylic monomers (a) and (b), to the resulting colloidal organic dispersion, then
- adding the requested amount of radical photoinitiator to the resulting composition, and
- mixing the resulting photocurable composition until homogeneous.

9. A method for preparing a cured anti-abrasion acrylic hard-coating on an organic substrate, said method comprising coating the liquid UV-curable composition according to claims 1 to 7 on an optical substrate, irradiating the coated substrate with UV light so as to obtain a cured acrylic antistatic hard-coating.

10. The method as claimed in claim 9 wherein the liquid photo-curable composition is coated onto the organic substrate by spin coating.

11. The method as claimed in any of claims 9 or 10, wherein the organic substrate is selected from thermoplastic polycarbonate or a polymer of allyl diglycol carbonate.

12. The method as claimed in any of claims 9 to 11, wherein the photocurable composition is coated with a dry coating thickness of from 1.5 µm to 7 µm, preferably of from 2.5 µm to 6 µm.

## Patentansprüche

1. Flüssige photohärtbare Zusammensetzung, umfassend:
- 25 bis 65 Gew.-%, vorzugsweise 35 bis 60 Gew.-%, bezogen auf das Gesamtgewicht der Zusammensetzung, einer Mischung von polyfunktionellen Acrylmonomeren, wobei die Mischung aus
(a) mindestens einem Monomer mit mindestens sechs Acrylfunktionen und
(b) mindestens einem Monomer mit zwei, drei oder vier (Meth)acrylfunktionen, vorzugsweise zwei oder drei Acrylfunktionen,
besteht,
- 25 bis 70 Gew.-%, vorzugsweise 55 bis 60 Gew.-%, bezogen auf das Gesamtgewicht der Zusammensetzung, mindestens eines organischen Lösungsmittels aus der Gruppe bestehend aus Methanol, Ethanol, Propanol, Butanol, Glykolen und Glykolmonoethern,
- 8,0 bis 20,0 Gew.-%, vorzugsweise 8,5 bis 12 Ges.-%, bezogen auf den Gesamtfeststoffgehalt der Zusammensetzung, mindestens eines mineralischen leitfähigen Kolloids aus der Gruppe bestehend aus Sb₂O₅ und SnO₂,
- 0,5 bis 5 Gew.-%, vorzugsweise 1,0-4,0 Gew.-%, bezogen auf das Gesamtgewicht der acrylfunktionellen Monomere (a) und (b), mindestens eines radikalischen Photoinitiators aus der Gruppe bestehend aus halogenalkylierten aromatischen Ketonen wie Chlormethylbenzophenonen; Ethylbenzoinether und Isopropylbenzoinether; Dialkoxyacetophenonen; Hydroxyketonen; alpha-Aminoketonen; Monoacyl- und Bisacylphosphinoxiden und -sulfiden; Triacylphosphinoxiden und Mischungen davon,
wobei die photohärtbare Zusammensetzung kein epoxidfunktionelles Monomer enthält.

2. Flüssige photohärtbare Zusammensetzung nach Anspruch 1, ferner umfassend 0,05 bis 0,50 Gew.-% mindestens eines Tensids, wobei das Tensid vorzugsweise aus fluorkohlenwasserstoffmodifizierten Polysiloxanen ausgewählt ist.

3. Flüssige photohärtbare Zusammensetzung nach Anspruch 1 oder 2, wobei es sich bei dem leitfähigen Kolloid um Sb₂O₅ handelt.

4. Flüssige photohärtbare Zusammensetzung nach einem der vorhergehenden Ansprüche, wobei es sich bei dem organischen Lösungsmittel um Propanol handelt.

5. Flüssige photohärtbare Zusammensetzung nach einem der vorhergehenden Ansprüche, wobei das Gewichtsverhältnis des Monomers bzw. der Monomere mit mindestens sechs Acrylfunktionen zu dem Monomer bzw. den Monomeren mit zwei, drei oder vier (Meth)acrylgruppen im Bereich von 20/80 bis 80/20, vorzugsweise 30/70 bis 70/30 und weiter bevorzugt 40/60 bis 60/40 liegt.

6. Flüssige photohärtbare Zusammensetzung nach einem der vorhergehenden Ansprüche, wobei das Monomer (a) mit mindestens sechs Acrylfunktionen aus der Gruppe bestehend aus Dipentaerythritolhexaacrylat, Polyesterhexaacrylat, Sorbitolhexaacrylat und fettsäuremodifiziertem Polyesterhexaacrylat ausgewählt ist und vorzugsweise Dipentaerythritolhexaacrylat ist.

7. Flüssige photohärtbare Zusammensetzung nach einem der vorhergehenden Ansprüche, wobei das mindestens eine Monomer (b) mit zwei, drei oder vier (Meth)acrylfunktionen aus der Gruppe bestehend aus Pentaerythritoltriacrylat, Pentaerythritoltetraacrylat, Tetraethylenglykoldiacrylat, Diethylenglykoldiacrylat, Triethylenglykoldiacrylat, 1,6-Hexandioldi(meth)acrylat, Tripropylenglykoldiacrylat, Dipropylenglykoldiacrylat, Ethylenglykoldimethacrylat, Trimethylolethantriacrylat, Trimethylolmethantriacrylat, Trimethylolpropantriacrylat, Trimethylolpropantrimethacrylat, 1,2,4-Butantrioltrimethacrylat, Tris(2-hydroxyethyl)isocyanurattriacrylat, Ditrimetholpropantetraacrylat, ethoxyliertem Pentaerythritoltetraacrylat, Triphenylolmethantriacrylat, Trisphenoltriacrylat, Tetraphenylolethantriacrylat, 1,2,6-Hexantrioltriacrylat, Glycerintriacrylat, Diglycerintriacrylat, Glycerinethoxylattriacrylat, Ethylenglykoldiacrylat, 1,4-Butandioldiacrylat, 1,4-Butandioldimethacrylat, Neopentylglykoldiacrylat, Cyclohexandimethanoldiacrylat, Dipropylenglykoldiacrylat und Polypropylenglykoldiacrylat ausgewählt ist.

8. Verfahren zur Herstellung einer flüssigen photohärtbaren Zusammensetzung gemäß Anspruch 1, bei dem man:
- die geforderte Menge von leitfähigem Kolloid in dem organischen Lösungsmittel dispergiert,
- die resultierende kolloidale organische Dispersion unter Mischen nach und nach mit der geforderten Menge einer Mischung der polyfunktionellen Acrylmonomere (a) und (b) oder jedes der polyfunktionellen Acrylmonomere (a) und (b) separat versetzt, dann
- die erhaltene Zusammensetzung mit der geforderten Menge von radikalischem Photoinitiator versetzt und
- die erhaltene photohärtbare Zusammensetzung mischt, bis sie homogen ist.

9. Verfahren zur Herstellung einer gehärteten Antiabrieb-Acrylhartbeschichtung auf einem organischen Substrat, bei dem man die flüssige UV-härtbare Zusammensetzung gemäß den Ansprüchen 1 bis 7 auf ein optisches Substrat aufträgt und das beschichtete Substrat mit UV-Licht bestrahlt, wodurch man eine gehärtete antistatische Acrylhartbeschichtung erhält.

10. Verfahren nach Anspruch 9, bei dem man die flüssige UV-härtbare Zusammensetzung durch Aufschleudern auf das organische Substrat aufträgt.

11. Verfahren nach einem der Ansprüche 9 oder 10, bei dem man das organische Substrat aus thermoplastischem Polycarbonat oder einem Polymer von Allyldiglykolcarbonat auswählt.

12. Verfahren nach einem der Ansprüche 9 bis 11, bei dem man die photohärtbare Zusammensetzung mit einer Trockenauftragsdicke von 1,5 µm bis 7 µm und vorzugsweise von 2,5 µm bis 6 µm aufträgt.

## Revendications

1. Composition photodurcissable liquide comprenant :
- de 25 à 65 % en poids, de préférence de 35 à 60 % en poids, par rapport au poids total de la composition, d'un mélange de monomères acryliques polyfonctionnels, ledit mélange étant composé de
(a) au moins un monomère comprenant au moins six groupes fonctionnels acryliques, et
(b) au moins un monomère comprenant deux, trois ou quatre groupes fonctionnels (méth)acryliques, de préférence deux ou trois groupes fonctionnels acryliques,
- de 25 à 70 % en poids, de préférence de 55 à 60 % en poids, par rapport au poids total de la composition, d'au moins un solvant organique choisi dans le groupe constitué par le méthanol, l'éthanol, le propanol, le butanol, les glycols, et les monoéthers de glycol,
- de 8,0 à 20,0 % en poids, de préférence de 8,5 à 12 % en poids, par rapport à la teneur totale en matières solides de la composition, d'au moins un colloïde conducteur minéral choisi dans le groupe constitué par Sb₂O₅ et SnO₂,
- de 0,5 à 5 % en poids, de préférence de 1,0 - 4,0 % en poids, par rapport au poids total de monomères fonctionnels acryliques (a) et (b), d'au moins un photoinitiateur radicalaire choisi dans le groupe constitué par les cétones aromatiques halogénoalkylées telles que les chlorométhylbenzophénones ; l'éther éthylique de benzoïne et l'éther isopropylique de benzoïne ; les dialcoxy-acétophénones ; les hydroxycétones ; les alpha-amino-cétones ; les oxydes et sulfures de monoacyl- et bisacyl-phosphine ; les oxydes de triacylphosphine ; et les mélanges de ceux-ci,
ladite composition photodurcissable ne contenant aucun monomère époxyfonctionnel.

2. Composition photodurcissable liquide selon la revendication 1, comprenant en outre de 0,05 à 0,50 % en poids d'au moins un tensioactif, ledit tensioactif étant de préférence choisi parmi les polysiloxanes modifiés par fluorocarbure.

3. Composition photodurcissable liquide selon la revendication 1 ou 2, dans laquelle le colloïde conducteur est Sb₂O₅.

4. Composition photodurcissable liquide selon l'une quelconque des revendications précédentes, dans laquelle le solvant organique est le propanol.

5. Composition photodurcissable liquide selon l'une quelconque des revendications précédentes, dans laquelle le rapport pondéral du monomère ou des monomères comprenant au moins six groupes fonctionnels acryliques au monomère ou aux monomères comprenant deux, trois ou quatre groupes (méth)acryliques est compris dans la gamme de 20/80 à 80/20, de préférence 30/70 à 70/30 et mieux encore 40/60 à 60/40.

6. Composition photodurcissable liquide selon l'une quelconque des revendications précédentes, dans laquelle le monomère (a) comprenant au moins six groupes fonctionnels acryliques est choisi dans le groupe constitué par l'hexaacrylate de dipentaérythritol, l'hexaacrylate de polyester, l'hexaacrylate de sorbitol, et l'hexaacrylate de polyester modifié par acide gras, et est de préférence l'hexaacrylate de dipentaérythritol.

7. Composition photodurcissable liquide selon l'une quelconque des revendications précédentes, dans laquelle l'au moins un monomère (b) comprenant deux, trois ou quatre groupes fonctionnels (méth)acryliques est choisi dans le groupe constitué par le triacrylate de pentaérythritol, le tétraacrylate de pentaérythritol, le diacrylate de tétraéthylène glycol, le diacrylate de diéthylène glycol, le diacrylate de triéthylène glycol, le di(méth)acrylate de 1,6-hexanediol, le diacrylate de tripropylène glycol, le diacrylate de dipropylène glycol, le diméthacrylate d'éthylène glycol, le triacrylate de triméthyloléthane, le triacrylate de triméthylolméthane, le triacrylate de triméthylolpropane, le triméthacrylate de triméthylolpropane, le triméthacrylate de 1,2,4-butanetriol, le triacrylate d'isocyanurate de tris(2-hydroxyéthyle), le tétraacrylate de ditriméthylolpropane, le tétraacrylate de pentaérythritol éthoxylé, le triacrylate de triphénylolméthane, le triacrylate de trisphénol, le triacrylate de tétraphényloléthane, le triacrylate de 1,2,6-hexanetriol, le triacrylate de glycérol, le triacrylate de diglycérol, le triacrylate d'éthoxylate de glycérol, le diacrylate d'éthylène glycol, le diacrylate de 1,4-butanediol, le diméthacrylate de 1,4-butanediol, le diacrylate de néopentylglycol, le diacrylate de cyclohexanediméthanol, le diacrylate de dipropylène glycol, et le diacrylate de polypropylène glycol.

8. Procédé de préparation d'une composition photodurcissable liquide selon la revendication 1, ledit procédé comprenant :
- la dispersion de la quantité requise de colloïde conducteur dans le solvant organique,
- l'ajout progressif sous malaxage de la quantité requise d'un mélange de monomères acryliques polyfonctionnels (a) et (b), ou séparément de chacun des monomères acryliques polyfonctionnels (a) et (b), à la dispersion colloïdale organique résultante, puis
- l'ajout de la quantité requise de photoinitiateur radicalaire à la composition résultante, et
- le mélange de la composition photodurcissable résultante jusqu'à l'homogénéité.

9. Procédé de préparation d'un revêtement dur acrylique anti-abrasion durci sur un substrat organique, ledit procédé comprenant le dépôt de la composition durcissable aux UV liquide selon les revendications 1 à 7 sur un substrat optique, et l'irradiation du substrat revêtu avec un rayonnement UV de manière à obtenir un revêtement dur acrylique antistatique durci.

10. Procédé selon la revendication 9 dans lequel la composition photodurcissable liquide est déposée sur le substrat organique par dépôt à la tournette.

11. Procédé selon l'une quelconque des revendications 9 et 10, dans lequel le substrat organique est choisi entre un polycarbonate thermoplastique et un polymère de carbonate d'allyldiglycol.

12. Procédé selon l'une quelconque des revendications 9 à 11, dans lequel la composition photodurcissable est déposée avec une épaisseur de revêtement sec de 1,5 µm à 7 µm, de préférence de 2,5 µm à 6 µm.
